# NEUE EUROPÄISCHE PATENTSCHRIFT

(11) **EP 1 157 907 B2**
(45) Veröffentlichungstag und Bekanntmachung des Hinweises auf die Entscheidung über den Einspruch: **19.11.2008**
(45) Hinweis auf die Patenterteilung: 19.04.2006
(21) Anmeldenummer: 01112331.2
(22) Anmeldetag: 19.05.2001
(51) Int. Cl.: B60R 25/02

(54) **Vorrichtung zum Verriegeln oder Entriegeln eines Lenkrads eines Kraftfahrzeuges**
Device for locking or unlocking of a motor vehicle steering wheel
Dispositif pour le verrouillage ou le déverrouillage du volant de direction d'un véhicule à moteur

(30) Priorität: 23.05.2000 DE 10025488
(43) Veröffentlichungstag der Anmeldung: 28.11.2001
(73) Patentinhaber: Marquardt GmbH, 78604 Rietheim-Weilheim (DE)
(72) Erfinder: Geber, Michael, 72574 Bad Urach (DE); Fitz, Helmut, 73660 Urbach (DE); Müller, Karl, 78628 Rottweil- Neufra (DE); Schwarz, Thomas, 78573 Wurmlingen (DE)
(74) Vertreter: Eisele, Otten, Roth & Dobler

(56) Entgegenhaltungen:
- EP-A- 0 764 566
- EP-A- 0 844 154
- DE-A- 1 810 975
- DE-A- 4 422 436
- DE-A- 4 436 326
- FR-A- 2 748 054
- JP-A- 5 033 538
- US-A- 3 959 996

## Beschreibung

Die Erfindung betrifft eine Vorrichtung zum Verriegeln und Entriegeln eines Lenkrades eines Kraftfahrzeugs nach dem Oberbegriff des Patentanspruchs 1.

Bei Fahrzeugen, die derzeit am Markt angeboten werden, wird beim Verriegeln des Lenkrades eines Kraftfahrzeugs die Lenksäule blockiert, indem ein als Bolzen ausgebildetes Blockierelement in eine Öffnung der Lenksäule eingeschoben wird. Dabei wird die Bewegung des Bolzens in der Bewegungsrichtung erzeugt durch eine Drehbewegung, die durch eine schraubenlinienförmige Hubkurve in eine Bewegung in Längsrichtung des Bolzens umgesetzt wird.

Eine ebenfalls in dieser Weise ausgebildete Vorrichtung zum Verriegeln und Entriegeln eines Lenkrades eines Kraftfahrzeugs ist auch aus der gattungsgemässen FR 2 748 054 A bekannt. Bei dieser Vorrichtung ist die schraubenlinienförmige Hubkurve von einer Gewindespindel mit gleichförmiger Steigung gebildet. Ebenso ist in der ebenfalls gattungsgemässen EP 0 764 566 A1 eine Vorrichtung zum Verriegeln und Entriegeln eines Lenkrades eines Kraftfahrzeugs mit einer eine gleichförmige Steigung aufweisenden Gewindespindel gezeigt. Schließlich ist in der Vorrichtung zum Verriegeln und Entriegeln eines Lenkrades eines Kraftfahrzeugs nach der EP 0 844.154 A2 die Hubkurve durch einen keilförmigen Schieber realisiert, dessen Keilfläche eine gleichförmige Steigung aufweist.

Der vorliegenden Erfindung liegt das Problem zugrunde, den verriegelungs- und den Entriegelungsvorgang zu verbessern.

Dieses Problem wird nach Anspruch 1 erfindungsgemäß gelöst.

Indem die Schraubenlinie am Ende der Einrückbewegung des Bolzens - und damit auch am Beginn der Ausrückbewegung - eine geringe Steigung aufweist, stehen bei konstantem Antriebsmoment eines die Bewegung des Bolzens verursachenden Elektromotors am Ende der Einrückbewegung wie auch am Anfang der Ausrückbewegung vergleichsweise große Kräfte zur Verfügung.

Dies erweist sich insbesondere dann als vorteilhaft, wenn der Bolzen infolge der Stellung der Lenkung in der Öffnung der Lenksäule unter mechanischer Spannung gehalten wird.

Während es bisher notwendig war, den Elektromotor so zu dimensionieren, dass auch bei einer konstanten Schraubenlinie am Beginn des Ausrückvorgangs hinreichend große Kräfte zur Verfügung stehen, kann durch die angepasste Dimensionierung der Steigung der Elektromotor geringer dimensioniert werden. Indem die Steigung gegen Ende der Ausrückbewegung größer wird, kann dann eine hinreichende Stellgeschwindigkeit des Bolzens erreicht werden, wenn dieser nicht mehr in der Öffnung der Lenksäule unter mechanischer Spannung gehalten wird.

Der Bolzen kann senkrecht oder in einem spitzen Winkel in die Lenksäule eintreten.

Bei einer weiteren Ausgestaltung der erfindungsgemäßen Vorrichtung nach Anspruch 2 ist das Blockierelement als Teil eines Kipphebels ausgebildet, der einen Angriffspunkt zur Übertragung von Kräften zum Ver- und Entriegeln des Lenkrades durch ein Verschwenken des Kipphebels und ein dadurch bedingtes Ein- bzw. Ausrücken des Blockierelements aus der Öffnung der Lenksäule aufweist.

Über diesen Kipphebel können wiederum unter Beachtung der Hebelverhältnisse am Beginn des Ausrückvorgangs vergleichsweise große Kräfte zur Verfügung gestellt werden.

Bei der Vorrichtung nach Anspruch 3 wird das Verschwenken des Kipphebels erzeugt durch eine Drehbewegung, die durch eine schraubenlinienförmige Hubkurve umgesetzt wird, wobei die Schraubenlinie entlang der Schwenkbewegung des Kipphebels unterschiedliche Steigungen aufweist.

Auch hierbei kann durch eine entsprechende Ausgestaltung die Steigung am Ende des Einrückvorgangs und damit auch am Beginn des Ausrückvorgangs entsprechend klein gestaltet werden, so dass dann entsprechend große Kräfte für die Schwenkbewegung des Kipphebels zur Verfügung stehen. Es wird dann ein Ausrücken des Kipphebels auch dann ermöglicht, wenn das Blockierelement infolge der Stellung der Lenkung in der Öffnung der Lenksäule unter mechanischer Spannung gehalten wird.

Dabei erweist sich der Einsatz der vorliegenden Erfindung als besonders vorteilhaft, weil aufgrund der Anpassung der benötigten Kräfte der Elektromotor entsprechend kleiner dimensioniert werden kann.

Nach Anspruch 4 ist in einer Ausgestaltung bei einer Vorrichtung zum Verriegeln und Entriegeln eines Lenkrades eines Kraftfahrzeugs weiterhin vorgesehen, dass ein Gehäuse zur Aufnahme des Verriegelungsmechanismus an der Lenksäule befestigt ist, wobei der Verriegelungsmechanismus in das Gehäuse einschiebbar ist, wenn sich das Blockierelement in der entriegelten Stellung befindet, wobei der Verriegelungsmechanismus durch das Blockierelement gegen eine Entnahme aus dem Gehäuse gesichert ist, wenn sich das Blockierelement in der verriegelten Stellung befindet.

Dabei erweist es sich als besonders vorteilhaft, dass der Verriegelungsmechanismus einfach montierbar und demontierbar ist und dennoch in seiner verriegelten Stellung sicher in seiner Position gehalten wird, wodurch eine Demontage zur Realisierung eines unberechtigten Zugriffs auf das Kraftfahrzeug hinreichend erschwert wird.

Gemäß Anspruch 5 ist eine weitere Ausbildung der erfindungsgemäßen Vorrichtung so ausgestaltet, dass ein Gehäuse zur Aufnahme des Verriegelungsmechanismus an der Lenksäule befestigt ist, wobei der Verriegelungsmechanismus in das Gehäuse einschiebbar ist, wenn sich das Blockierelement in der entriegelten Stellung befindet, wobei der Verriegelungsmechanismus durch ein Klemmelement gegen eine Entnahme aus dem Gehäuse gesichert ist, wenn sich das Blockierelement in der verriegelten Stellung befindet.

Vorteilhaft kann also auch durch eine solche Gestaltung eine Entnahme des Verriegelungsmechanismus verhindert werden, wenn das Schloss verriegelt ist.

Vorteilhaft kann also erreicht werden, dass eine Montage des Verriegelungsmechanismus einfach möglich ist, wenn der Verriegelungsmechanismus in entriegelten Zustand ist. Wird der Verriegelungsmechanismus verriegelt, ist dieser dann auch gegen ein unbefugtes Ausbauen gesichert. Ein Ausbau ist erst wieder möglich, wenn der Verriegelungsmechanismus wieder entriegelt ist.

Ein Ausführungsbeispiel der Erfindung ist in der Zeichnung näher dargestellt. Es zeigt dabei im einzelnen:
Fig. 1 eine erste erfindungsgemäße Vorrichtung,
Fig. 2 die Vorrichtung nach Figur 1 in einer anderen Ansicht,
Fig. 3 eine weitere erfindungsgemäße Vorrichtung in einer entriegelten Stellung,
Fig. 4 die Vorrichtung nach Figur 3 in einer verriegelten Stellung und
Fig. 5 - Fig. 9 verschiedenen Möglichkeiten zur Befestigung eines Verriegelungsmachanismus.

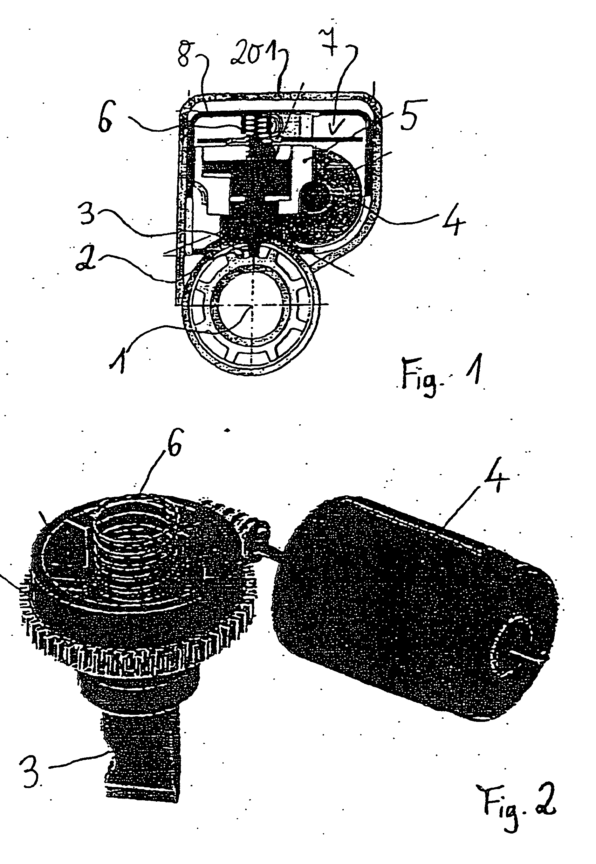

In Figur 1 ist eine Lenksäule 1 gezeigt, wobei die Betrachtungsrichtung in axialer Längsrichtung der Lenksäule orientiert ist. Senkrecht zu dieser Längsrichtung der Lenksäule erstreckt sich ein Bolzen 2, der in seiner eingerückten Stellung (Darstellung der Figur 1) in eine Öffnung 3 der Lenksäule eingreift. In dieser eingerückten Stellung verhindert der Bolzen 2 eine Verdrehung der Lenksäule.

Die Bewegung des Bolzens 2 wird durch eine Drehbewegung eines Elektromotors 4 bewirkt, dessen Drehbewegung der Welle durch eine Schnecke und ein Zahnrad umgelenkt wird.

Diese Drehbewegung wird dann durch eine schraubenlinienförmige Hubkurve in eine Längsbewegung des Bolzens 2 umgesetzt.

Weiterhin ist eine Druckfeder 6 zu sehen, die eine Abwärtsbewegung des Bolzens 2 unterstützt.

In dem Gehäuse 5 ist durch eine entsprechende Ausformung die schraubenlinienförmige Hubkurve realisiert, die eine Bewegung des Bolzens 2 in seiner Längsrichtung bewirkt.

Vorteilhaft ändert sich dabei die Steigung der Schraubenlinie derart, dass die Steigung am Ende der Einrückbewegung des Bolzens 2 und damit auch am Beginn der Ausrückbewegung des Bolzens 2 geringe Werte annimmt, wohingegen die Steigung am Ende der Ausrückbewegung größere Werte annimmt, um insgesamt eine hinreichende Ausrückgeschwindigkeit zu erreichen.

Figur 2 zeigt die Vorrichtung nach Figur 1 in einer Draufsicht von schräg oben. Gleiche Teile zur Figur 1 sind dabei mit identischen Bezugszeichen versehen.

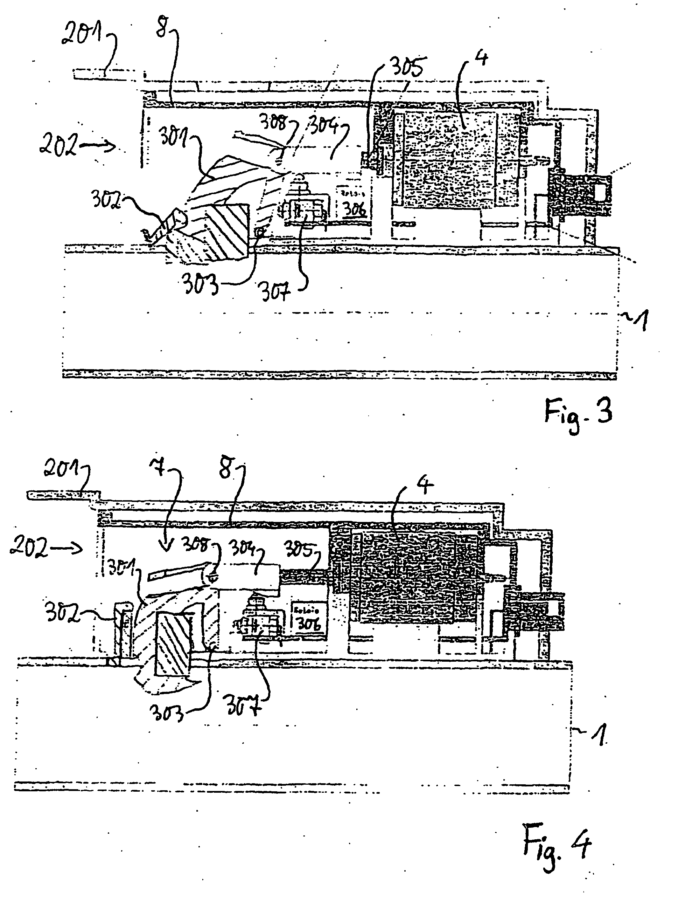

Figur 3 zeigt eine weitere erfindungsgemäße Vorrichtung in einer entriegelten Stellung. Identische Teile zu den Figuren 1 und 2 sind dabei mit denselben Bezugszeichen versehen. Dies betrifft den Elektromotor 4 sowie die Längsachse 1 der Lenksäule. Figur 3 zeigt die Vorrichtung also in einer gegenüber der Darstellung der Figur 1 um 90° gedrehten Ansicht.

Weiterhin ist ein Kipphebel 301 zu sehen, dessen unteres Ende als Blockierelement wirkt, indem es bei einer entsprechenden Kippbewegung in eine Öffnung der Lenksäule eingreift. Der Kipphebel 301 wird über eine Führung, speziell eine Drehachse 303 geführt. In der verriegelten Stellung des Kipphebels 301 greift weiterhin ein Klemmhebel 302 in eine Öffnung in der Lenksäule ein, so dass dann die Vorrichtung insgesamt gegen ein Herausziehen gesichert ist. Der Kipphebel 301 weist einen oberen Angriffspunkt 308 auf, an dem ein Bügel 304 mit einem Innengewinde angebracht ist. Mit diesem Bügel 304 wirkt eine Hülse 305 mit einem Gewinde zusammen, die wiederum durch einen Elektromotor 4 antreibbar ist. Wird die Hülse in eine Drehbewegung versetzt, wird über das Innengewinde des Bügels 304 dieser in Längsrichtung bewegt. Über die Bewegung des Angriffspunkts 308 wird ebenfalls der Kipphebel 301 bewegt. Es ist ein Endschalter 307 vorgesehen, der beim Erreichen der jeweiligen Endposition anspricht und über das Relais 306 den Elektromotor 4 abschaltet. Figur 3 zeigt die Vorrichtung in einer entriegelten Stellung.

Figur 4 zeigt die Vorrichtung in einer verriegelten Stellung.

Vorteilhaft weist auch bei dieser Ausgestaltung das Innengewinde des Bügels 304 unterschiedliche Steigungen auf, so dass also auch zu Beginn der Ausrückbewegung des Kipphebels große Kräfte übertragbar sind.

Weiterhin ist in der Darstellung der Figur 4 zu sehen, dass die Bewegungsrichtung des Bügels 4 in der verriegelten Stellung zu Beginn der Bewegung senkrecht steht auf der Verbindungslinie des Drehpunktes 303 und des Angriffspunktes 308. Bei gleicher Kraft ist also hier aufgrund der geometrischen Verhältnisse das Drehmoment zu Beginn des Entriegelungsvorganges größer als gegen Ende des Entriegelungsvorganges, zu dem die Bewegungsrichtung des Bügels 304 und damit die wirkende Kraft nicht mehr senkrecht auf der Verbindungslinie des Drehpunkts 303 zu dem Angriffspunkt 308 steht.

Weiterhin ist den Figuren 1, 3 und 4 zu entnehmen, dass an der Lenksäule 1 ein Gehäuse 201 angebracht ist zur Aufnahme des Verriegelungsmechanismus 7. In den gezeigten Darstellungen der Figuren 1, 3 und 4 ist dieser Verriegelungsmechanismus 7 wiederum von einem eigenen Gehäuse 8 umgeben. Der Verriegelungsmechanismus 7 - und damit in dem dargestellten Ausführungsbeispiel auch das ihn umgebende Gehäuse 8 - wird in Richtung des Pfeils 202 in das an der Lenksäule 1 angebrachte Gehäuse 201 eingeschoben. Es ist dabei zu sehen, dass der Verriegelungsmechanismus 7 dann einschiebbar ist, wenn das Blockierelement 3, 302 in der entriegelten Stellung ist. Weiterhin ist zu sehen, dass der Verriegelungsmechanismus 7 in der Position in dem Gehäuse 201 gehalten wird, wenn das Blockierelement 2, 302 in der verriegelten Position ist. Das bedeutet auch, dass eine Demontage nur möglich ist, wenn das Blockierelement 2, 302 wiederum in der entriegelten Position ist. Es ist beispielsweise weiterhin möglich, den Verriegelungsmechanismus 7 in der in das Gehäuse 201 eingebauten Position zusätzlich durch einen mittels einer Federkraft belastetes Bolzenelement zu halten, das in das Gehäuse 201 eingreift. Vorteilhaft ist dieses Bolzenelement dann von außen zugänglich. Das bedeutet, dass dieses Bolzenelement in ein Loch in dem Gehäuse 201 eingreift, so dass eine Demontage erfolgen kann, indem das Bolzenelement entgegen seiner Federkraft eingedrückt wird, so dass dann der Verriegelungsmechanismus 7 entfernt werden kann, wenn das Blockierelement 2, 302 nicht in der verriegelten Position ist.

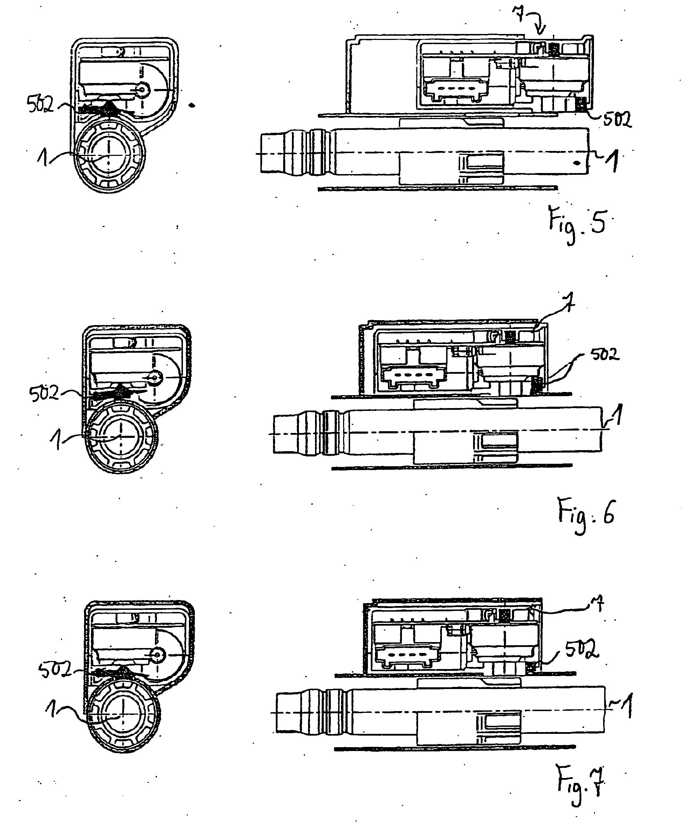

Die Figuren 5 bis.7 zeigen die Schritte zum Einbringen eines Verriegelungsmechanismus 7 in die Tasche. Zunächst wird entsprechend der Darstellung der Figur 5 der Verriegelungsmechanismus 7 parallel zur Lenksäule 1 in die Tasche am Mantelrohr eingeführt.

In der Darstellung der Figur 6 wird der Verriegelungsmechanismus 7 um einige mm in Richtung Lenksäule 1 verschoben. Dabei taucht der Verriegelungsmechanismus 7 in einen rechteckigen Ausschnitt am Mantelrohr ein.

In der Darstellung der Figur 7 wird der Verriegelungsmechanismus 7 nochmals um einige mm parallel zur Lenksäule bewegt, bis das Klemmelement 502 in eine Öffnung im Mantelrohr einschnappt. Wenn dann eine Verriegelung durch ein Absenken des Sperrbolzens erfolgt, kann auch das Klemmelement 502 nicht mehr angehoben werden. Der Verriegelungsmechanismus ist dann gegen eine Entnahme gesichert.

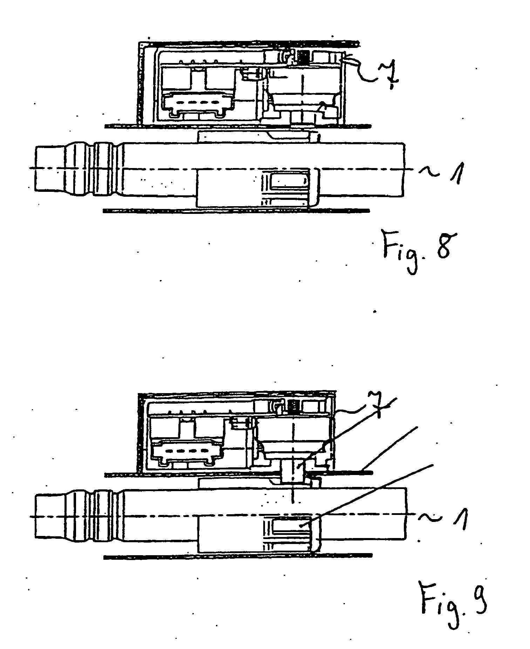

Die Figuren 8 und 9 zeigen die Verhältnisse, wenn kein separates Klemmelement vorhanden ist, um den Verriegelungsmechanismus 7 gegen eine Entnahme zu sichern.

In der Darstellung der Figur 8 wird der Verriegelungsmechanismus 7 in die Tasche am Mantelrohr der Lenksäule 1 eingeschoben.

Figur 9 zeigt, dass der Verriegelungsmechanismus 7 in verriegeltem Zustand durch den abgesenkten Sperrbolzen gesichert ist, weil dieser Sperrbolzen in eine Öffnung im Mantelrohr sowie in eine der entsprechenden Öffnungen der Lenksäule 1 eingreift.

## Patentansprüche

1. Vorrichtung zum Verriegeln und Entriegeln eines Lenkrades eines Kraftfahrzeugs, mit der die Lenksäule (1) blockierbar ist, indem ein als Bolzen (2) ausgebildetes Blockierelement in eine Öffnung (3) der Lenksäule (1) eingeschoben wird, wobei die Bewegung des Bolzens (2) in der Bewegungsrichtung des Bolzens (2) erzeugt wird durch eine Drehbewegung, die durch eine schraubenlinienförmige Hubkurve (5) in eine Bewegung in Längsrichtung des Bolzens (2) umgesetzt wird, wobei die Drehbewegung mittels eines Elektromotors (4) erzeugt wird,
**dadurch gekennzeichnet, dass** die Schraubenlinie entlang der Längsbewegung des Bolzens (2) unterschiedliche Steigungen aufweist, wobei die Schraubenlinie am Ende der Einrückbewegung des Bolzens (2) beziehungsweise am Beginn der Ausrückbewegung des Bolzens (2) eine geringe Steigung aufweist, wobei bei konstantem Antriebsmoment des die Bewegung des Bolzens (2) verursachenden Elektromotors (4) am Ende der Einrückbewegung wie auch am Anfang der Ausrückbewegung vergleichsweise große Kräfte zur Verfügung stehen, wenn der Bolzen (2) in Folge der Stellung der Lenkung in der Öffnung (3) der Lenksäule (1) unter mechanischer Spannung gehalten ist.

2. Vorrichtung nach Anspruch 1,
**dadurch gekennzeichnet,**
**dass** das Blockierelement (301) als Kipphebel (301) ausgebildet ist, der einen Angriffspunkt (308) zur Übertragung von Kräften zum Ver- und Entriegeln des Lenkrades durch ein Verschwenken des Kipphebels (301) und ein **dadurch** bedingtes Ein- bzw. Ausrücken des Kipphebels (301) aus der Öffnung der Lenksäule (1) aufweist.

3. Vorrichtung nach Anspruch 2,
**dadurch gekennzeichnet,**
**dass** das Verschwenken des Kipphebels (301) erzeugtwird durch eine Drehbewegung, die durch eine schraubenlinienförmige Hubkurve (304) umgesetzt wird, wobei die Schraubenlinie entlang der Schwenkbewegung des Kipphebels (301) unterschiedliche Steigungen aufweist.

4. Vorrichtung nach einem der Ansprüche 1 bis 3,
**dadurch gekennzeichnet, dass** ein Gehäuse (201) zur Aufnahme des Verriegelungsmechanismus (7) an der Lenksäule (1) befestigt ist, wobei der Verriegelungsmechanismus (7) in das Gehäuse (201) einschiebbar ist, wenn sich das Blockierelement (2, 301) in der entriegelten Stellung befindet, wobei der Verriegelungsmechanismus (7) durch das Blockierelement (2, 301) gegen eine Entnahme aus dem Gehäuse (201) gesichert ist, wenn sich das Blockierelement (2, 301) in der verriegelten Stellung befindet.

5. Vorrichtung nach einem der Ansprüche 1 bis 4,
**dadurch gekennzeichnet,**
**dass** ein Gehäuse (201) zur Aufnahme des Verriegelungsmechanismus (7) an der Lenksäule (1) befestigt ist, wobei der Verriegelungsmechanismus (7) in das Gehäuse (201) einschiebbar ist, wenn sich das Blockierelement (2, 301) in der entriegelten Stellung befindet, wobei der Verriegelungsmechanismus (7) durch ein Klemmelement (302) gegen eine Entnahme aus dem Gehäuse (201) gesichert ist, wenn sich das Blockierelement (2, 301) in der verriegelten Stellung befindet.

## Claims

1. Device for locking and unlocking a steering wheel of a motor vehicle, by means of which the steering column (1) can be locked, in that a locking element in the form of a bolt (2) is inserted into an opening (3) of the steering column (1), whereby the movement of the bolt (2) in the direction of movement of the bolt (2) is produced by a rotational movement, which is converted by means of a helical line shaped rising curve (5) into a movement in the longitudinal direction of the bolt (2), whereby the rotational movement is produced by means of an electric motor (4),
**characterised in that** the helical line has varying inclines along the longitudinal movement of the bolt (2), whereby the helical line at the end of the engaging movement of the bolt (2) or at the beginning of the disengaging movement of the bolt (2) has a low incline, whereby with a constant driving torque of the electric motor (4) causing the movement of the bolt (2) at the end of the engaging movement and also at the beginning of the disengaging movement comparatively high forces are available, when the bolt (2) is held under mechanical tension due to the position of the steering system in the opening (3) of the steering column (1).

2. Device according to claim 1,
**characterised in that**
the locking element (301) is in the form of a tilting lever (301), which has an application point (308) for transferring forces for locking and unlocking the steering wheel by turning the tilting lever (301) and a thereby conditional engaging or disengaging of the tilting lever (301) out of the opening of the steering column (1).

3. Device according to claim 2,
**characterised in that**
the turning of the tilting lever (301) is produced by a rotational movement which is converted by a helical line-shaped rising curve (304), whereby the helical line has varying inclines along the pivoting movement of the tilting lever (301).

4. Device according to one of claims 1 to 3,
**characterised in that**
a housing (201) for mounting the locking mechanism (7) is secured onto the steering column (1), whereby the locking mechanism (7) can be inserted into the housing (201), when the locking element (2, 301) is in the unlocked position, whereby the locking mechanism (7) is secured by the locking element (2, 301) from removal out of the housing (2010) when the locking element (2, 301) is in the locked position.

5. Device according to one of claims 1 to 4,
**characterised in that**
a housing (201) for mounting the locking mechanism (7) is secured onto the steering column (1), whereby the locking mechanism (7) can be inserted into the housing (201) when the locking element (2, 301) is in the unlocked position, whereby the locking mechanism (7) is secured by a clamping element (302) from removal from the housing (201) when the locking element (2, 301) is in the locked position.

## Revendications

1. Dispositif pour le verrouillage et le déverrouillage du volant de direction d'un véhicule à moteur par lequel la colonne de direction (1) peut être bloquée en insérant un élément de blocage conçu sous la forme d'une broche (2) dans une ouverture (3) de la colonne de direction (1), le mouvement de la broche (2) étant créé dans le sens du mouvement de ladite broche (2) par un mouvement de rotation qui est converti par une came de levage de forme hélicoïdale (5) en un mouvement dans le sens longitudinal de la broche (2), ledit mouvement de rotation étant produit au moyen d'un moteur électrique (4),
**caractérisé en ce que** la forme hélicoïdale présente des pas différents le long du mouvement longitudinal de la broche (2), ladite forme hélicoïdale présentant un pas réduit à la fin du mouvement d'insertion de la broche (2) ou au début du mouvement de retrait de la broche (2), des forces relativement importantes étant disponibles, à couple d'entraînement constant du moteur électrique (4) produisant le mouvement de la broche (2), à la fin du mouvement d'insertion comme au début du mouvement de retrait, lorsque la broche (2) est maintenue sous contrainte mécanique, à la suite de la position de commande dans l'ouverture (3) de la colonne de direction (1).

2. Dispositif selon la revendication 1,
**caractérisé en ce que** l'élément de blocage (301) est conçu sous la forme d'un culbuteur (301), lequel présente un point d'attaque (308) destiné à la transmission des forces en vue du verrouillage et du déverrouillage du volant de direction par le biais d'un basculement du culbuteur (301) et d'une insertion ou d'un retrait du culbuteur (301) ainsi provoqué dans ou hors de l'ouverture de la colonne de direction (1).

3. Dispositif selon la revendication 2,
**caractérisé en ce que** le basculement du culbuteur (301) est créé par un mouvement de rotation, lequel est converti par une came de levage de forme hélicoïdale (304), la forme hélicoïdale présentant des pas différents le long du mouvement de pivotement du culbuteur (301).

4. Dispositif selon l'une des revendications 1 à 3,
**caractérisé en ce qu'**un boîtier (201) destiné à loger le mécanisme de verrouillage (7) est fixé sur la colonne de direction (1), le mécanisme de verrouillage (7) pouvant être inséré dans le boîtier (201) si l'élément de blocage (2, 301) se trouve en position déverrouillée, le mécanisme de verrouillage (7) étant protégé contre une extraction hors du boîtier (201) par l'élément de blocage (2, 301) si l'élément de blocage (2, 301) se trouve en position verrouillée.

5. Dispositif selon l'une des revendications 1 à 4,
**caractérisé en ce qu'**un boîtier (201) destiné à loger le mécanisme de verrouillage (7) est fixé sur la colonne de direction (1), le mécanisme de verrouillage (7) pouvant être inséré dans le boîtier (201) si l'élément de blocage (2, 301) se trouve en position déverrouillée, le mécanisme de verrouillage (7) étant protégé contre une extraction hors du boîtier (201) par un élément de serrage (302) si l'élément de blocage (2, 301) se trouve en position verrouillée.
